# EUROPEAN PATENT APPLICATION

(11) **EP 0 689 971 A1**
(43) Date of publication of application: **03.01.1996**
(21) Application number: 95109972.0
(22) Date of filing: 27.06.1995
(51) Int. Cl.: B60R 21/32

(54) **Structure for intentionally activating a vehicle occupant protection device**

(30) Priority: 29.06.1994 JP 148187/94
(71) Applicant: KABUSHIKI KAISHA TOKAI-RIKA-DENKI-SEISAKUSHO, Niwa Aichi-ken (JP)
(72) Inventor: Tamura, Keiichi, c/o K.K. Tokai-Rika, Ohguchi-cho, Niwa, Aichi-ken (JP)
(74) Representative: Dreiss, Hosenthien, Fuhlendorf & Partner

(57) **Abstract**

The trigger mechanism (10) of a vehicle occupant protection device (e.g. airbag) has a control member (80) having three operating positions: a non-operative position in which activation of the protection device is impossible; an operative position in which operation of the protection device occurs during sudden deceleration; and an intentionally activating position in which the protection device is activated directly. The trigger (10) is supported in a structure (82,84,86,98) for positioning the control member (80). The control member (80) is moved from its non-operational position to its operating position by a sliding member (86,86A). Further movement of the sliding member is prevented by deformable blocking devices (186A). Movement of the control member (80) to its intentionally activating position is possible when the blocking devices (186A) are disengaged using a second sliding member (98). The control member (80) is then engaged by the first sliding member (86,86G). When the vehicle is to be scrapped, or dismantled, the protection device can be intentionally activated *in situ*.

## Description

### BACKGROUND OF THE INVENTION

### Field of the Invention

The present invention relates to a structure for intentionally activating a vehicle occupant protection device which is used in a vehicle occupant protection device, such as an air bag device, operating when a vehicle suddenly decelerates and which intentionally activates the vehicle occupant protection device at times when the vehicle has not decelerated suddenly.

### Description of the Related Art

An inflator, which is equipped with a sensor for detecting a state of sudden deceleration of a vehicle, is disposed in an air bag device which is installed in the body or the steering wheel of a vehicle. When the vehicle suddenly decelerates, the sensor activates the inflator so that gas is generated instantaneously, and a bag body inflates and unfolds.

In order to not activate the air bag device inadvertently at times when a vehicle in which the air bag device is disposed is being scrapped or at times when a steering wheel is being replaced in a case in which the air bag device is installed in the steering wheel, it is necessary to intentionally ignite the inflator of the air bag device in advance, and thereafter, to scrap the air bag device.

Conventionally, after the air bag device is removed from the vehicle, the air bag device is suspended inside a stack of tires by means of a rope and is dropped so as to activate the sensor disposed in the inflator, thereby intentionally igniting the inflator. As a result, labor and time are involved in stacking the tires and the like.

### SUMMARY OF THE INVENTION

In view of the aforementioned, an object of the present invention is to provide a structure for intentionally activating a vehicle occupant protection device which, when a vehicle has not been decelerated suddenly (for example, when the vehicle is stopped), can intentionally activate a vehicle occupant protection device safely and easily.

In order to solve the above-described drawback, a first aspect of the present invention is a structure for intentionally activating a vehicle occupant protection device which is used in a vehicle occupant protection device operating when a vehicle suddenly decelerates and which intentionally activates the vehicle occupant protection device when the vehicle has not decelerated suddenly, comprising: operation control means, movable to an intentionally activating position, for intentionally activating the vehicle occupant protection device; preventing means, engaging with the operation control means, for preventing movement of the operation control means to the intentionally activating position; and canceling means for canceling engagement of the operation control means and the preventing means.

In the first aspect, usually, the operation control means engages with the preventing means, and movement of the operation control means to the intentionally activating position, at which the operation control device intentionally activates the vehicle occupant protection device, is prevented.

In a case in which the vehicle occupant protection device is to be intentionally activated, when engagement of the operation control means and the preventing means is canceled by the canceling means, movement of the operation control means to the intentionally activating position is possible. Then, when the operation control means is moved to the intentionally activating position, the vehicle occupant protection device is intentionally activated.

A second aspect of the present invention is a structure for intentionally activating a vehicle occupant protection device which is used in a vehicle occupant protection device operating when a vehicle suddenly decelerates, comprising: an operation control member which is positioned by operational force in any of an non-operative position, in which the operation control member makes operation of the vehicle occupant protection device impossible, an operative position, in which the operation control member makes operation of the vehicle occupant protection device possible, and an intentionally activating position, in which the operation control member intentionally activates the vehicle occupant protection device when the vehicle has not decelerated suddenly, and a deforming portion is formed at the operation control member at a side thereof in a direction in which the operation control member moves to the intentionally activating position; a preventing member engaging with the deforming portion of the operation control member and preventing movement of the operation control member to the intentionally activating position; and a canceling member which pushes and deforms the deforming portion of the operation control member, and cancels engagement of the operation control member and the preventing member.

In the above-described second aspect, before the vehicle occupant protection device is assembled to a vehicle, the operation control means is disposed in the operation-stopped position in which operation of the vehicle occupant protection device is stopped. The vehicle occupant protection device does not operate even if an external force is applied thereto.

After the vehicle occupant protection device is assembled to a vehicle, the operation control means is disposed at the operative position at which operation of the vehicle occupant protection device is possible. Accordingly, when, while the vehicle is traveling, the vehicle suddenly decelerates, the vehicle occupant protection device is operated.

A deforming portion is formed at the operation control means at a side thereof in a direction in which the operation control means moves to the intentionally activating position. Because the deforming portion engages with the preventing means, movement of the operation control means to the intentionally activating position is prevented.

Accordingly, when the vehicle occupant protection device is to be intentionally activated, the deforming portion of the operation control means is pushed and deformed by the canceling means, and engagement of the operation control means and the preventing means is canceled. When engagement is canceled, movement of the operation control means to the intentionally activating position is possible. Then, when the operation control means is moved to the intentionally activating position, the vehicle occupant protection device is intentionally activated.

### BRIEF DESCRIPTION OF THE DRAWINGS

Fig. 1 is a plan view illustrating main portions of a structure for intentionally activating a vehicle occupant protection device relating to an embodiment of the present invention, and illustrates an operation-stopped state of a sensor applied to the vehicle occupant protection device.

Fig. 2 is a plan view illustrating main portions of the structure for intentionally activating a vehicle occupant protection device relating to the embodiment of the present invention, and illustrates an operative state of the sensor applied to the vehicle occupant protection device in which state movement to an intentionally activating state is restricted.

Fig. 3 is a plan view illustrating main portions of a structure for intentionally activating a vehicle occupant protection device relating to the embodiment of the present invention, and illustrates an operative state of the sensor applied to the vehicle occupant protection device in which state movement to an intentionally activating state is possible.

Fig. 4A is a side view illustrating a moving mechanism of a release plate in the structure for intentionally activating a vehicle occupant protection device relating to the embodiment of the present invention, and illustrates an operation-stopped state of the sensor applied to the vehicle occupant protection device.

Fig. 4B is a side view illustrating the moving mechanism of the release plate in the structure for intentionally activating a vehicle occupant protection device relating to the embodiment of the present invention, and illustrates an operative state of the sensor.

Fig. 4C is a side view illustrating the moving mechanism of the release plate in the structure for intentionally activating a vehicle occupant protection device relating to the embodiment of the present invention, and illustrates an operative state of the sensor.

Fig. 4D is a side view illustrating the moving mechanism of the release plate in the structure for intentionally activating a vehicle occupant protection device relating to the embodiment of the present invention, and illustrates an intentionally activated state of the sensor.

Fig. 5A is a side view illustrating another example of a moving mechanism of the release plate in the structure for intentionally activating a vehicle occupant protection device relating to the embodiment of the present invention, and illustrates an operative state of the sensor applied to the vehicle occupant protection device.

Fig. 5B is a side view illustrating the moving mechanism of Fig. 5A, and is a view of an intentionally activated state of the sensor.

Fig. 6 is a view seen along arrow I-I of Fig. 4A.

Fig. 7 is an exploded perspective view of a moving member, an adjustment bolt and the like in the structure for intentionally activating a vehicle occupant protection device relating to the embodiment of the present invention.

Fig. 8 is a sectional view of the sensor of the vehicle occupant protection device to which the structure for intentionally activating a vehicle occupant protection device relating to the embodiment of the present invention is applied, and illustrates an operation-stopped state of the sensor.

Fig. 9 is a sectional view of the sensor of the vehicle occupant protection device to which the structure for intentionally activating a vehicle occupant protection device relating to the embodiment of the present invention is applied, and illustrates an operative state of the sensor.

Fig. 10 is a sectional view of the sensor of the vehicle occupant protection device to which the structure for intentionally activating a vehicle occupant protection device relating to the embodiment of the present invention is applied, and illustrates an intentionally activated state of the sensor.

Fig. 11A is a front view illustrating an external appearance of the sensor of the vehicle occupant protection device to which the structure for intentionally activating a vehicle occupant protection device relating to the embodiment of the present invention is applied.

Fig. 11B is a bottom view illustrating the external appearance of the sensor in Fig. 11A.

Fig. 12A is an enlarged view illustrating operation of the sensor of the vehicle occupant protection device to which the structure for intentionally activating a vehicle occupant protection device relating to the embodiment of the present invention is applied, and is a view corresponding to Fig. 8.

Fig. 12B is an enlarged view illustrating operation of the sensor of the vehicle occupant protection device to which the structure for intentionally activating a vehicle occupant protection device relating to the embodiment of the present invention is applied, and is a view corresponding to Fig. 9.

Fig. 12C is an enlarged view illustrating operation of the sensor of the vehicle occupant protection device to which the structure for intentionally activating a vehicle occupant protection device relating to the embodiment of the present invention is applied, and is a view corresponding to Fig. 10.

Fig. 13 is a schematic explanatory view of an air bag device to which the structure for intentionally activating a vehicle occupant protection device relating to the embodiment of the present invention is applied.

### DETAILED DESCRIPTION OF THE PREFERRED EMBODIMENTS

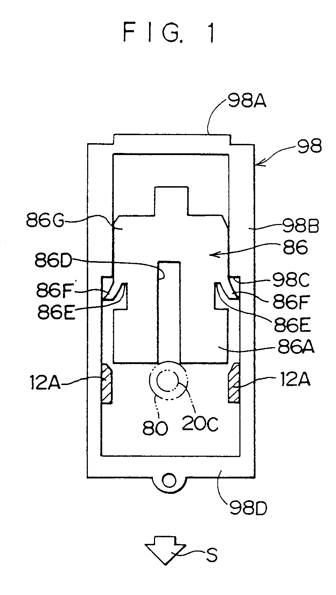

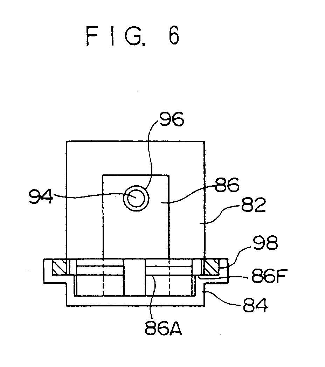

An embodiment of the structure for intentionally activating a vehicle occupant protection device relating to the present invention, which embodiment is applied to an air bag device, is illustrated in Figs. 1 through 13 and is described hereinafter on the basis of these drawings. The following description is of a case in which the air bag device is installed in a steering wheel. However, the present invention is not limited to this case, and is also applicable to cases in which the air bag device is installed in another portion of a vehicle. Further, the present invention is not limited to air bag devices, and is also applicable to vehicle occupant protection devices such as preloaders or the like.

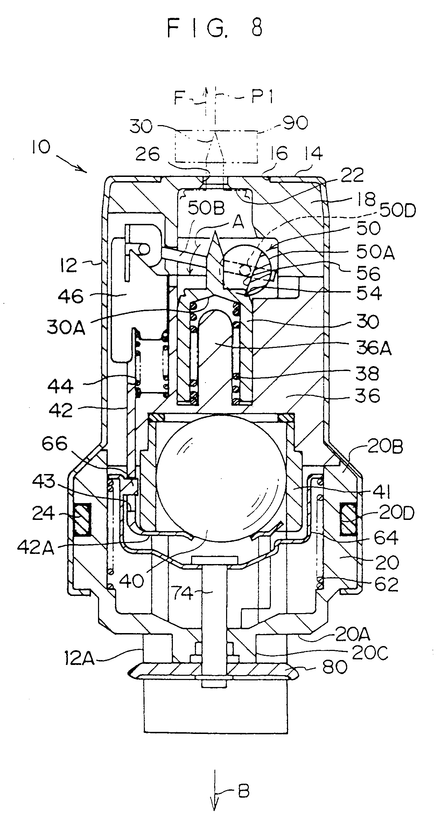

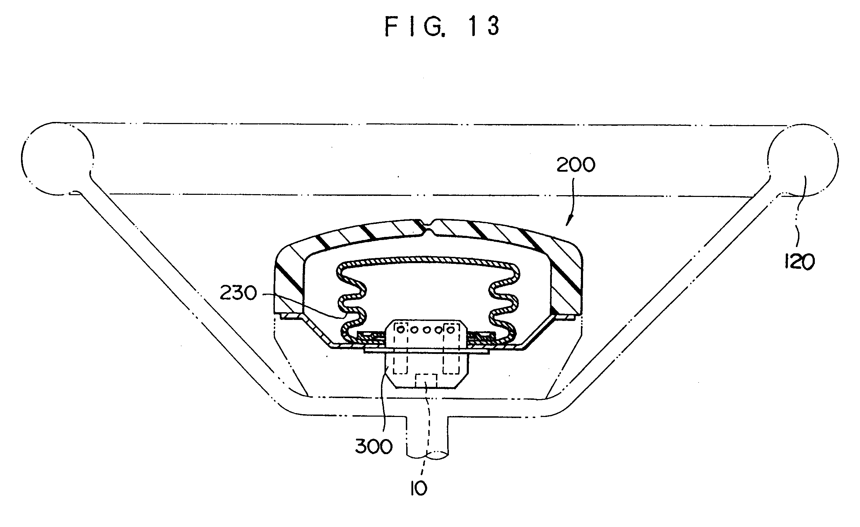

As illustrated in Fig. 13, an acceleration sensor 10, such as that illustrated in Figs. 8 through 10, for activating an inflator is mounted to an inflator 300 for inflating a bag body 230 of an air bag device 200. The inflator 300 having the acceleration sensor 10 is mounted to a vehicle by being supported at a steering wheel 120.

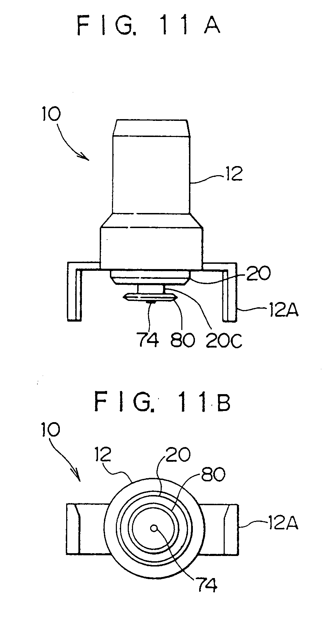

As illustrated in Figs. 8 through 10, the acceleration sensor 10 includes a substantially cylindrical sensor cover 12 having a wall portion 14 at one end thereof. The sensor cover 12 is fixed to the inflator 300 such that the wall portion 14 is positioned at a vehicle occupant side. As illustrated in Figs. 11A and 11B, a pair of L-shaped movement restricting portions 12A extend at the outer side of the end of the sensor cover 12 at the front side of the vehicle (the lower side in Fig. 11A) from opposing positions. The movement restricting portions 12A serve as a preventing means which restricts movement of a moving member 86 which serves as an operation control means and which will be described later. Further, as illustrated in Fig. 8, at the inner side of the sensor cover 12, a body block 18, a holder 36 and a cover block 20 are disposed continuously from the wall portion 14 side. The cover block 20, which is positioned at the vehicle front side (the side in the direction of arrow B), includes a cylindrical peripheral wall 20B and a substantially circular-plate-shaped closed end portion 20A which is formed at one end of the peripheral wall 20B in the axial direction thereof (the end in the direction of arrow B) and which has a cylindrical protruding portion 20C which is formed at the central portion so as to protrude outwardly. The cover block 20 is fixed to the sensor cover 12 such that the closed end portion 20A is positioned at the vehicle front side. An annular notch 20D is formed in the outer side of the peripheral wall 20B. An O-ring 24 is disposed in the notch 20D so that the space between the sensor cover 12 and the cover block 20 is sealed.

A through-hole 16 is formed in the central portion of the wall portion 14. A through-hole 26, which is positioned coaxially with the through-hole 16 and which has a smaller diameter than the through-hole 16, is formed in the body block 18. A substantially cylindrical ignition pin 30 is disposed within the holder 36 coaxially with an axial line P1 of the acceleration sensor 10 and is slidable along the axial line P1.

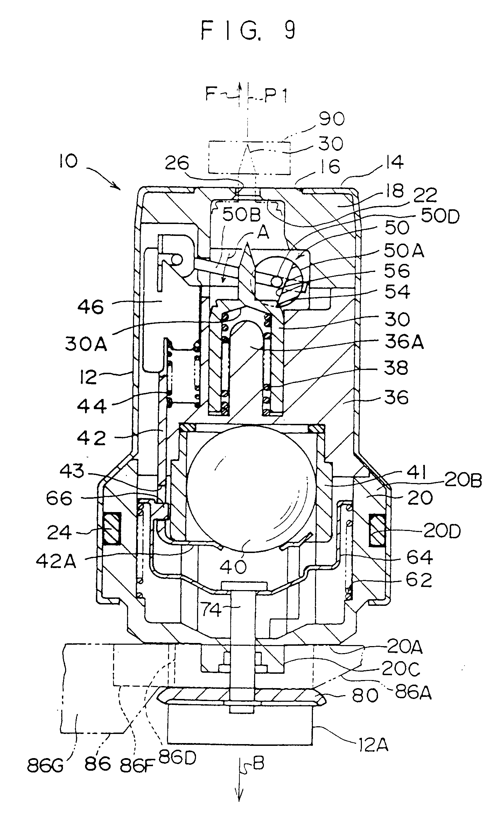

One axial direction side of the ignition pin 30, i.e., the body block 18 side of the ignition pin 30, is a closed surface. A sharp portion is formed from the central portion thereof outwardly in the axial direction. In a state in which the ignition pin 30 has moved as much as possible toward a bottom wall 22 of the body block 18 (the state illustrated by the imaginary lines in Figs. 8 and 9), the sharp portion projects to the exterior of the acceleration sensor 10 from the through-hole 26.

Further, at the other axial direction end side of the ignition pin 30, i.e., the side in the direction of arrow B, a concave portion 30A is formed coaxially with the outer peripheral portion of the ignition pin 30. A substantially cylindrical-column-shaped guide portion 36A formed at the holder 36 is inserted into the concave portion 30A. A firing spring 38 is disposed in the gap between the guide portion 36A and the concave portion 30A so as to urge the ignition pin 30 toward a detonator 90 serving as an explosive. The ignition pin 30 is thereby always urged in the direction of the through-hole 26 (in the direction of arrow F) by the spring 38.

A concave portion is provided at the end portion of the holder 36 at the cover block 20 side. A cylindrical case 41 is fixed to the concave portion. A spherical inertial mass member 40 is accommodated within the case 41. When an acceleration of a predetermined value or more is applied to the inertial mass member 40, the inertial mass member 40 overcomes the damping resistance generated between the inertial mass member 40 and the case 41 and inertially moves toward the front of the vehicle (i.e., in the direction of arrow B).

An arm 42, whose longitudinal direction is the axial direction of the sensor cover 12 (the direction of the axial line P1) and which is movable along the axial direction, is disposed in correspondence with the inertial mass member 40. A substantially donut-shaped receiving portion 42A is formed at one end of the arm 42, i.e., at the vehicle front side of the inertial mass member 40. An elongated hole 43, whose longitudinal direction is the direction of the axial line P1, is formed in the arm 42 in a vicinity of the receiving portion 42A. Further, a plate-shaped spring receiving member 46 is fixed to a portion of the arm 42 in a vicinity of the other end thereof. A bias spring 44 is disposed between the spring receiving member 46 and the holder 36, so that the arm 42 is always biased in the direction of the vehicle occupant (i.e., in the direction of arrow F).

A trigger lever 50 is disposed so as to oppose the other end of the arm 42. The trigger lever 50 includes a drive shaft 50B, one end of which engages with the other end of the arm 42, and a cylindrical-column-shaped trigger main body 50A which is mounted such that the axial center thereof is orthogonal to the other end of the drive shaft 50B. The trigger main body 50A includes a pair of shaft portions 50D which project outwardly from the centers of the axial direction end surfaces of the trigger main body 50A. The shaft portions 50D are rotatably accommodated in a pair of concave portions (unillustrated) formed in the body block 18. Accordingly, the trigger lever 50 is rotatable in the counterclockwise direction (the direction of arrow A) from the position illustrated in Figs. 8 and 9 around these shaft portions 50D. Further, a portion of the trigger main body 50A is notched, and the edge portion thereof near the ignition pin 30 side forms an engagement pawl portion 56.

As illustrated in Figs. 8 and 9, an engagement recess 54 is formed in a shoulder portion of the sharp end side of the ignition pin 30. The engagement pawl portion 56 engages with the engagement recess 54. In this engaged state, the sharp portion of the ignition pin 30 urged by the firing spring 38 is maintained at a position at which the sharp portion is spaced apart from the through-hole 26 (the position of the solid lines in Figs. 8 and 9). When the trigger lever 50 rotates in the direction of arrow A around the shaft portions 50D, the engagement of the engagement pawl portion 56 and the engagement recess 54 is canceled.

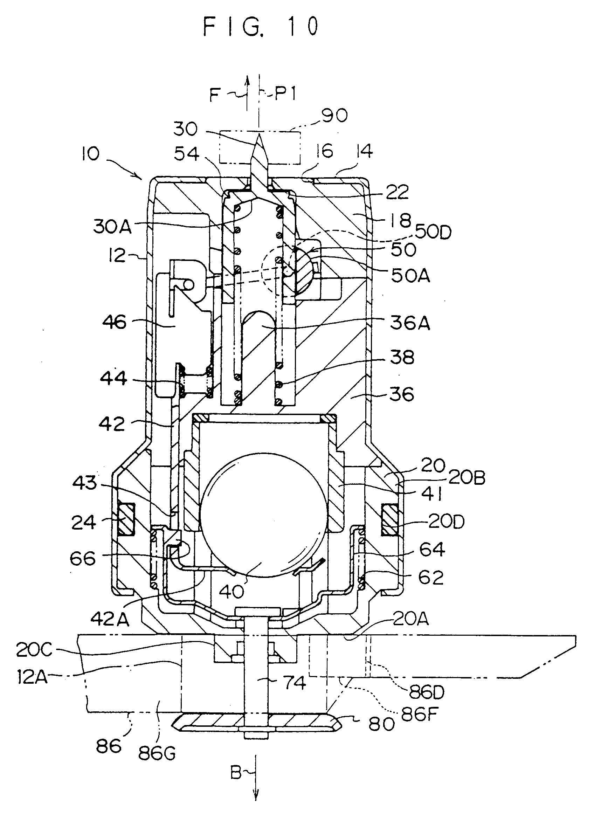

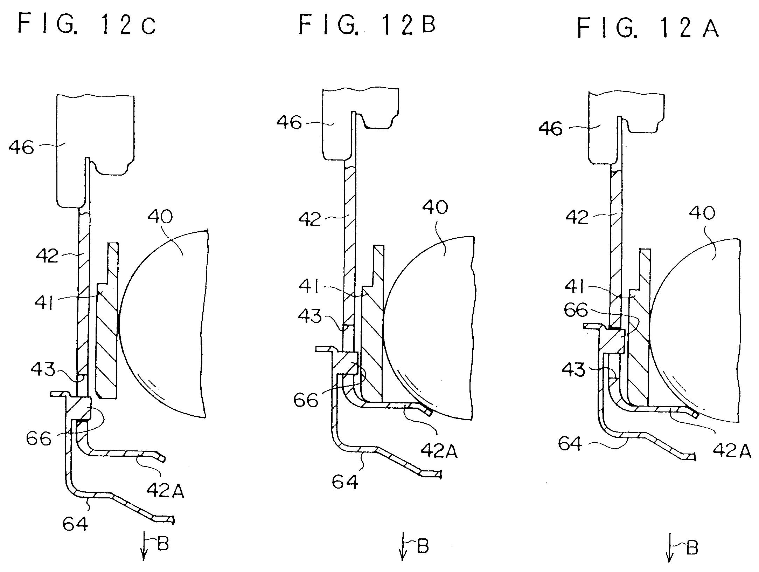

A cylindrical safety releasing cover 64 is disposed so as to be movable toward the front of the vehicle (i.e., in the direction of arrow B) at the outer peripheral side of the receiving portion 42A of the arm 42 within the cover block 20. A convex portion 66 which is inserted loosely into the elongated hole 43 of the arm 42 is formed at the distal end side of the safety releasing cover 64. Accordingly, as illustrated in Figs. 8 and 12A, when the convex portion 66 is positioned at the vehicle occupant side of the elongated hole 43, movement of the inertial mass member 40 and the safety releasing cover 64 toward the front of the vehicle (i.e., in the direction of arrow B) is prevented, and the acceleration sensor 10 is in an operation-stopped state. Further, as illustrated in Figs. 9 and 12B, when the convex portion 66 is positioned at the vehicle front side of the elongated hole 43, movement of the inertial mass member 40 and the safety releasing cover 64 in the direction of arrow B becomes possible, and the acceleration sensor 10 is in an operative state. As illustrated in Figs. 10 and 12C, when the safety releasing cover 64 moves further in the direction of arrow B from the state in which the convex portion 66 is positioned at the vehicle front side of the elongated hole 43, as illustrated in Figs. 9 and 12B, the acceleration sensor 10 is in an intentionally activated state. Specifically, when the safety releasing cover 64 is intentionally moved in the direction of arrow B, the arm 42 is moved in the direction of arrow B via the convex portion 66, and the trigger lever 50 is rotated. As a result, the engagement of the ignition pin 30 and the trigger lever 50 is intentionally canceled, and the ignition pin 30 is fired due to the urging force of the spring 38.

One end of a shaft 74, which penetrates through the cover block 20, is mounted to a substantially central portion of the safety releasing cover 64. A disc-shaped release plate 80 is mounted to the other end of the shaft 74. The safety releasing cover 64 moves as the release plate 80 and the shaft 74 move in the direction of arrow B. Further, a coil spring 62 contacts the distal end of the safety releasing cover 64 so that the safety releasing cover 64 is always urged in the direction of the vehicle occupant (i.e., in the direction of arrow F) by the coil spring 62.

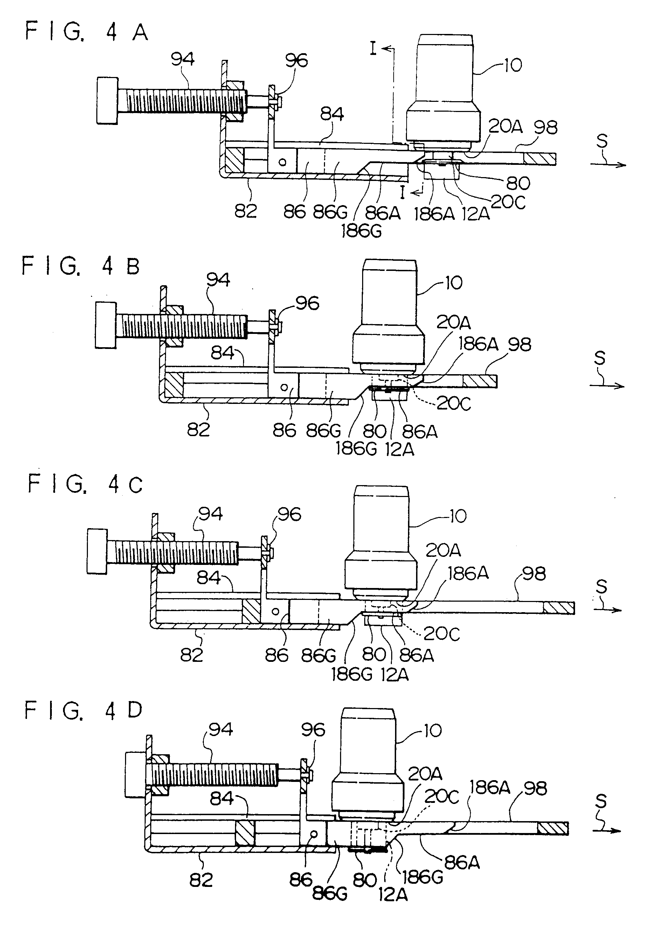

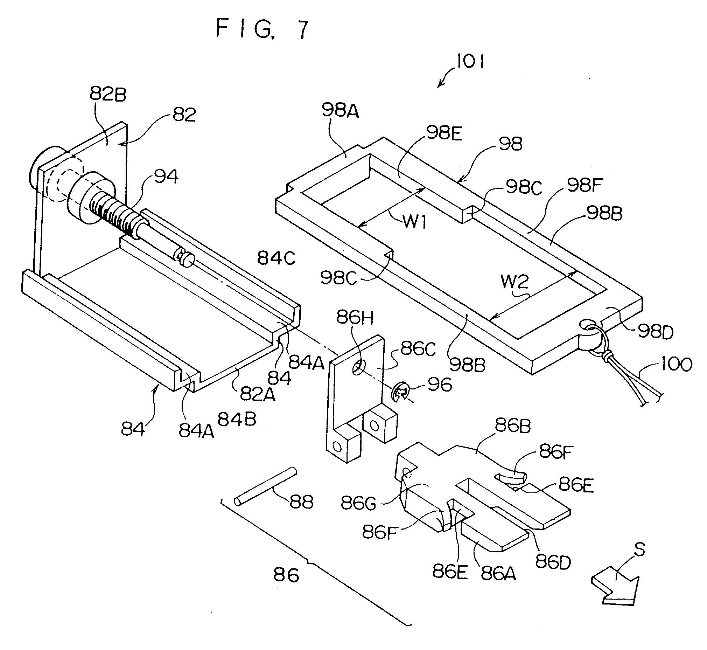

As illustrated in Fig. 7, a moving mechanism 101 is provided in order to switch the positions of the release plate 80, the shaft 74 and the safety releasing cover 64. The moving mechanism 101 includes a bracket 82, which is substantially L-shaped and mounted to a steering wheel 120, and a moving member 86 and a pusher member 98, which are disposed at one side of the substantial L-shape of the bracket 82. The moving member 86 serves as an operation control means, and the pusher member 98 serves as a canceling means. A bottom surface portion 82A is formed at this one side of the bracket 82. The transverse direction ends of the bottom surface portion 82A are formed as width-expanding portions 84A which extend in directions of moving apart from each other via step portions 84B. Ends of the width-expanding portions 84A are formed as standing walls 84C. In this way, a pair of guide portions 84 are formed at this one side of the bracket 82 at the transverse direction end portions thereof. As will be described in detail later, the pusher member 98 is shaped as a substantially rectangular frame, and is movable along the standing walls 84C on the pair of guide portions 84 of the bracket 82. When viewed from above, the moving member 86 is substantially U-shaped with a concave portion 86D formed at the central portion of the front end portion thereof. The moving member 98 is movable along the step portions 84B and on the bottom surface portion 82A of the bracket 82 and within the frame of the pusher member 98. The moving member 86 includes an operation member 86B, which is substantially U-shaped when viewed from above, and a screwing member 86C, which is substantially rectangular and has a pair of protruding portions at transverse direction ends of one of the longitudinal direction ends thereof. A protrusion protrudes outwardly from a central portion of the U-shaped outer periphery of the operation member 86B. The operation member 86B and the screwing member 86C are connected by inserting the protrusion between the pair of protruding portions of the screwing member 86C and inserting a pin 88 into holes formed in the protruding portions and the protrusion. As illustrated in Figs. 4A through 4D, the connected operation member 86B and screwing member 86C are substantially L-shaped as seen from the side.

As illustrated in Fig. 7, a hole 86H is formed in the upper side of the screwing member 86C, i.e., at the side of the plate-shaped portion opposite the protruding portions. A distal end small-diameter portion of an adjustment bolt 94, which screws into the bracket 82, penetrates through the hole 86H. An E-ring 96 engages with the distal end of the adjustment bolt 94 which has penetrated through the hole 86H, so as to prevent pulling out of the adjustment bolt 94 from the bracket 82. Accordingly, by screwing the adjustment bolt 94 into the bracket 82, the moving member 86 can be slid in the direction of arrow S on the bracket 82. As illustrated in Figs. 1 through 4, by moving the moving member 86, the protruding portion 20C formed at the cover block 20 of the acceleration sensor 10 is accommodated within the concave portion 86D of the operation member 86B, the moving member 86 and the release plate 80 engage, and the release plate 80 moves in the direction of arrow B in Figs. 8 through 10.

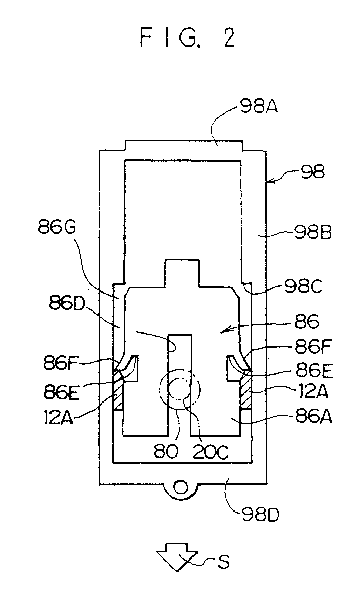

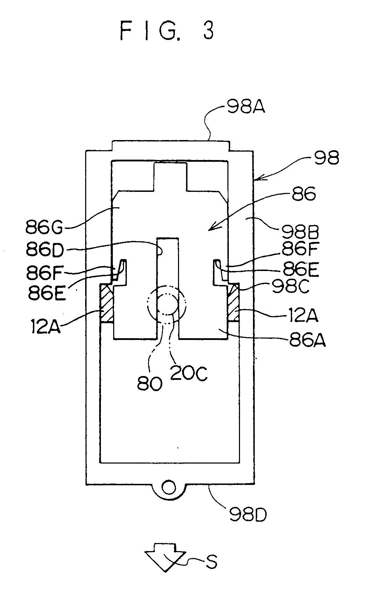

As shown in Fig. 7, the width of the operation member 86B is slightly smaller than the width between the step portions 84B of the bracket 82 and the inner width of the pair of opposing movement restricting portions 12A formed at the sensor cover 12 (see Figs. 1 through 3). When the moving member 86 moves, the moving member 86 is guided by the wall surfaces of the step portions 84B and by the movement restricting portions 12A. As shown in Fig. 4A, a thin portion 86A, whose thickness is approximately half of that of a rear end portion 86G, is formed at the front end of the operation member 86B. In the state of Fig. 4A in which the release plate 80 and the protruding portion 20C formed on the cover block 20 of the acceleration sensor 10 abut, the acceleration sensor 10 is in an operation-stopped state as illustrated in Fig. 8. In the states illustrated in Figs. 4B, 4C in which the thin portion 86A is inserted between the closed end portion 20A and the release plate 80 and the release plate 80 is separated from the protruding portion 20C, the operation sensor 10 is in an operative state as illustrated in Fig. 9. In the state illustrated in Fig. 4D in which the rear end portion 86G is inserted between the closed end portion 20A and the release plate 80 and the release plate 80 is further separated from the protruding portion 20C, the acceleration sensor 10 is in an intentionally activated state as illustrated in Fig. 10. As shown in Fig. 4A and elsewhere, chamfered inclined portions 186A, 186G are formed at the front end side end surface and at the region between the thin portion 86A and the rear end portion 86G, respectively, so as to facilitate engagement with the release plate 80. Substantially rectangular parallelopiped notches 86E are formed in both side portions of the upper side of the chamfered inclined portion 186G between the thin portion 86A and the rear end portion 86G. Extending portions 86F serving as deforming portions are formed so as to extend from the rear side of the notches 86E toward the front side and the outer side. The extending portions 86F are positioned on the width-expanding portions 84A of the guide portions 84. As illustrated in Figs. 1 and 2, when the moving member 86 moves in the direction of arrow S, the moving member 86 abuts the end surfaces of the pair of movement restricting portions 12A of the sensor cover 12, so that movement of the moving member 86 in the direction of arrow S is restricted. Further, as illustrated in Fig. 3, the extending portions 86F can be elastically deformed or plastically deformed by the pushing of the pusher member 98. Due to deformation of the extending portions 86F, engagement of the moving member 86 and the movement restricting portions 12A is canceled, and movement of the moving member 86 in the direction of arrow S is made possible again.

As illustrated in Fig. 7, the pusher member 98 is a substantially rectangular frame shape formed by a supporting portion 98A, a pair of arms 98B which extend in parallel from the sides of the supporting portion 98A, and a connecting portion 98D. The moving member 86 is disposed within this frame.

The pair of arms 98B are disposed on the width-expanding portions 84A of the corresponding guide portions 84 of the bracket 82. The distance between the outer sides of the arms 98B is slightly smaller than the inner width between the standing walls 84C of the pair of guide members 84. Further, the transverse direction dimensions, in the direction in which the arms 98B approach each other, of the portions of the pair of arms 98B near the supporting portion 98A are larger than the transverse direction dimensions of the other portions of the arms 98B. A narrow portion 98E, whose inner width dimension W1 slidably accommodates the rear end portion 86G of the moving member 86, is formed by the inner side surfaces of the portions of the arms 98B near the supporting portion 98A. The width between the inner sides of the other portions of the arms 98B, i.e., the portions of the arms 98B near the connecting portion 98D, is slightly larger than the width between the outer side surfaces of the pair of movement restricting portions 12A of the sensor cover 12. A wide portion 98F, whose inner width dimension W2 can accommodate the extending portions 86F of the moving member 86, is formed by the inner side surfaces of these other portions of the arms 98B. The narrow portion 98E and the wide portion 98F are connected via step portions 98C. Accordingly, when the outer side surfaces of the pair of arms 98B contact the inner side surfaces of the standing walls 84C of the guide portions 84 and the inner side surfaces of the wide portion 98F contact the outer side surfaces of the movement restricting portions 12A and the pusher member 98 is moved, the pusher member 98 is guided by the guide portions 84 and the movement restricting portions 12A in the direction of arrow S in Figs. 1 through 3. When the pusher member 98 is moved in the direction of arrow S to the state shown in Figs. 3 and 4C from the state shown in Figs. 2 and 4B in which the rear end portion 86G of the moving member 86 is positioned within the wide portion 98F of the pusher member 98, the step portions 98C or the narrow portion 98E push the extending portions 86F of the moving member 86 into the notches 86E, and the extending portions 86F elastically deform or plastically deform inwardly. Further, a through-hole is formed in the substantially central portion of the connecting portion 98D. By pulling a wire 100 which is attached to the through-hole, the pusher member 98 is moved in the direction of arrow S.

It is preferable to provide a moderating means such as a click or to provide a spring or the like so that the pusher member 98 does not inadvertently move on the width-expanding portions 84A of the guide portions 84.

In addition to the detonator 90, an unillustrated enhancer, gas generating material and the like are accommodated in the inflator 30 to which the acceleration sensor 10 is mounted, as illustrated in Fig. 13. When the vehicle suddenly decelerates, the ignition pin 30 of the acceleration sensor 10 strikes the detonator 90 and ignites the detonator 90. Due to this ignition, the gas generating material combusts, gas is generated, the gas is supplied to the interior of the bag body 230 via gas holes of the inflator 300, and the bag body 230 inflates.

Next, operation of the present embodiment will be described.

Before the inflator 300 is installed in the steering wheel 120 of a vehicle, as illustrated in Figs. 1 and 4A, the thin portion 86A of the moving member 86 is separated, in the direction opposite the direction of arrow S, from the region between the release plate 80 and the closed end portion 20A of the cover block 20. Therefore, as illustrated in Figs. 8 and 12A, the safety releasing cover 64 is urged by the coil spring 62 in the direction of the vehicle occupant (i.e., in the direction of arrow F), the convex portion 66 of the safety releasing cover 64 is positioned at the vehicle occupant side of the elongated hole 43 of the arm 42, and movement of the arm 42 in the direction of arrow B is prevented. Because movement of the arm 42 is prevented, movement of the inertial mass member 40 toward the front of the vehicle (i.e., in the direction of arrow B) is prevented. Therefore, even if an external force is applied to the inertial mass member 40, the acceleration sensor 10 does not operate.

After the inflator 300 is installed in the steering wheel 120, by screwing in the adjustment bolt 94, the moving member 86 is slid along the closed end portion 20A of the cover block 20 while being guided by the step portions 84B of the bracket 82 and by the inner side surfaces of the movement restricting portions 12A of the sensor cover 12. Due to the sliding of the moving member 86, the protruding portion 20C of the cover block 20 is accommodated in the concave portion 86D of the moving member 86 (from Figs. 1 to Fig. 3), and the moving member 86 and the release plate 80 engage. The release plate 80 moves toward the front of the vehicle (i.e., in the direction of arrow B), and as illustrated in Fig. 4B, the thin portion 86A of the moving member 86 is interposed between the release plate 80 and the closed end portion 20A of the cover block 20. As the release plate 80 moves, as illustrated in Figs. 9 and 12B, the shaft 74 and the safety releasing cover 64 move in the direction of arrow B, and the convex portion 66 of the safety releasing cover 64 is positioned at the vehicle front side of the elongated hole 43 of the arm 42. Movement of the inertial mass member 40 and the arm 42 in the direction of arrow B becomes possible, and the acceleration sensor 10 is set in an operative state.

Accordingly, when, while the vehicle is traveling, the vehicle suddenly decelerates, an acceleration of a predetermined value or greater is applied to the inertial mass member 40, and the inertial mass member 40 moves inertially in the direction of arrow B and moves the arm 42 in the direction of arrow B. In this way, the trigger lever 50 rotates around the shaft portions 50D in the counterclockwise direction (the direction of arrow A), and engagement of the engagement pawl portion 56 of the trigger lever 50 and the engagement recess 54 of the ignition pin 30 is canceled. The ignition pin 30 is moved in the direction of the vehicle occupant (i.e., in the direction of arrow F) by the urging force of the firing spring 38, and the sharp portion of the ignition pin 30 projects from the through-hole 26, strikes the detonator 90, and ignites the detonator 90. The enhancer thereby ignites, and the gas generating material ignites and combusts.

Fig. 4D illustrates the intentionally activated state of the air bag device when the vehicle is being scrapped. As illustrated in Fig. 4D, when the adjustment bolt 94 is screwed in even further and the moving member 86 is positioned such that the thick rear end portion 86G thereof is interposed between the release plate 80 and the closed end portion 20A of the cover block 20, as illustrated in Figs. 10 and 12C, as the release plate 80 moves in the direction of arrow B due to the sliding of the moving member 86, the shaft 74 and the safety releasing cover 64 move further in the direction of arrow B. Because the elongated hole 43 abuts the convex portion 66 of the safety releasing cover 64, the arm 42 is moved in the direction of arrow B by the movement of the safety releasing cover 64. As a result, the trigger lever 50 rotates in the counterclockwise direction (i.e., in the direction of arrow A), and the engagement of the engagement pawl portion 56 of the trigger lever 50 and the engagement recess 54 of the ignition pin 30 is canceled. The ignition pin 30 moves in the direction of the vehicle occupant (i.e., in the direction of arrow F) due to the urging force of the firing spring 38, and the detonator 90 ignites.

As illustrated in Fig. 7, the deformable extending portions 86F are formed at the inclined surface portion between the thin portion 86A and the rear end portion 86G of the moving member 86. Therefore, as illustrated in Fig. 2, the extending portions 86F abut the end surfaces of the movement restricting portions 12A of the sensor cover 12, and sliding of the moving member 86 in the direction of arrow S from the position of Figs. 2 and 4B to the position of Fig. 4D (the intentionally activating position) is restricted. Specifically, movement of the release plate 80 and the safety releasing cover 64 from the position of Figs. 9 and 12B to the position of Figs. 10 and 12C is restricted.

When the vehicle is to be scrapped or when it is necessary to intentionally activate the air bag device, by pulling the wire 100, as illustrated in Fig. 4C, the pusher member 98 is slid in the direction of the moving member 86 due to the guiding of the guide portions 84 of the bracket 82 and the movement restricting portions 12A of the sensor cover 12. When the pusher member 98 is slid, as illustrated in Fig. 3, due to the step portions 98C or the narrow portion 98E of the arms 98B, the extending portions 86F of the moving member 86 are pushed into the notches 86E of the moving member 86 until the extending portions 86F do not abut the end surfaces of the movement restricting portions 12A. In this way, sliding of the moving member 86 from the positions of Figs. 4B and 4C to the position of Fig. 4D is possible.

Accordingly, thereafter, if the adjustment bolt 94 is further screwed in, the arm 42 is forcibly moved by the movement of the safety releasing cover 64, and the acceleration sensor 10 is set in an intentionally activated state.

As described above, in the present embodiment, an intentionally activated state can be obtained in addition to the operative state of the acceleration sensor 10. Therefore, a vehicle occupant protection device such as an air bag device or the like can be intentionally activated safely and easily in a state in which the vehicle has not decelerated suddenly. As a result, for example, a vehicle occupant protection device such as an air bag can be intentionally operated by a simple operation in a state in which the vehicle occupant protection device remains mounted to the vehicle. Further, because the movement restricting portions 12A which prevent movement of the moving member 86 to the intentionally activating position are provided, it is possible to intentionally activate the acceleration sensor 10 only at those times when it is truly desired to do so.

In the above-described embodiment, the pusher member 98 moves, the extending portions 86F of the moving member 86 are deformed, i.e., displaced, and the state in which movement of the moving member 86 is prevented by the movement restricting portions 12A of the sensor cover 12 is canceled, and the vehicle occupant protection device can be intentionally activated by subsequent further movement of the moving member 86. However, the present invention is not limited to this embodiment. A structure is applicable in which the vehicle occupant protection device is intentionally activated in two-stages: the engagement of the operation control means and the preventing means is canceled, and the operation control means is moved to the intentionally activating position.

In the above embodiment, the acceleration sensor 10 which is intentionally activated due to the pulling out of the release plate 80 is described. However, an acceleration sensor 10 which is intentionally activated by the release plate 80 being pushed in or being rotated is also applicable to the present invention. In this case, a mechanism for converting the movement of the moving member 86 into pushing-in of the release plate 80 or rotation of the release plate 80 maybe be provided. In a case in which the release plate 80 is rotated, in place of the moving member 86, a rotary member which engages with the release plate 80 and rotates the release plate 80 may be provided.

Further, the above embodiment includes the pusher member 98, and during intentional activation, the engagement of the moving member 86 and the movement restricting portions 12A is canceled by the movement of the pusher member 98. However, the present invention may be structured such that the engaged state and the non-engaged state of the operation control means and the preventing means can be obtained alternatively. Or, the operation control means or the preventing means may be structured to serve as the canceling means as well.

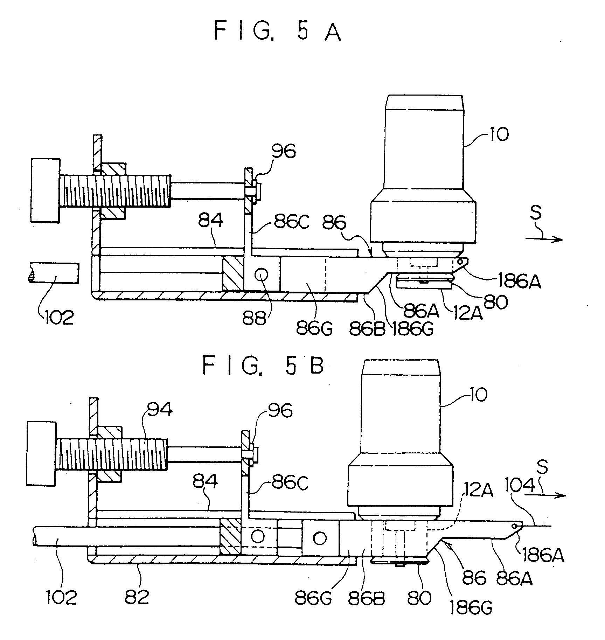

When the acceleration sensor 10 is intentionally operated after the engaged state of the operation control means and the preventing means is canceled, as illustrated in Fig. 5, the pin 88 of the moving member 86 may be pulled out and the operation member 86B may be pushed by a rod-shaped jig 102 or may be pulled by a wire 104. In this way, remote operation is possible, and the acceleration sensor 10 can safely be activated intentionally. Further, the operation member 86B and the screwing member 86C of the moving member 86 may be formed integrally.

In the above-described embodiment, the acceleration sensor 10, which activates the detonator due to the mechanical movement of the moving force of the inertial mass member 40, is used. However, an acceleration sensor which transmits movement of the inertial mass member 40 to the detonator via electrical energy is also applicable to the present invention. Further, the present invention is not only applicable to air bag devices and is applicable to other vehicle occupant protection devices such as a device which is used in a webbing take-up apparatus and which activates a preloader to tightly apply a webbing to a vehicle occupant when the vehicle suddenly decelerates. The present invention is also applicable, for example, to a vehicle occupant protection device in which powder is ignited and pressurized fluid is discharged by using an acceleration sensor.

## Claims

1. A structure for intentionally activating a vehicle occupant protection device which is used in a vehicle occupant protection device operating when a vehicle suddenly decelerates and which intentionally activates the vehicle occupant protection device when the vehicle has not decelerated suddenly, comprising:
operation control means, movable to an intentionally activating position, for intentionally activating the vehicle occupant protection device;
preventing means, engaging with said operation control means, for preventing movement of said operation control means to said intentionally activating position; and
canceling means for canceling engagement of said operation control means and said preventing means.

2. A structure for intentionally activating a vehicle occupant protection device according to claim 1, further comprising:
moving means for moving said operation control means to said intentionally activating position.

3. A structure for intentionally activating a vehicle occupant protection device according to claim 2, further comprising:
guiding means for guiding said operation control means when said operation control means moves.

4. A structure for intentionally activating a vehicle occupant protection device according to claim 1, wherein said operation control means can be positioned in said intentionally activating position, in an operative position in which said operation control means makes operation of the vehicle occupant protection device possible, and in an non-operative position in which said operation control means makes operation of the vehicle occupant protection device impossible.

5. A structure for intentionally activating a vehicle occupant protection device according to claim 4, wherein said intentionally activating position, said operative position and said non-operative position are positioned substantially linearly.

6. A structure for intentionally activating a vehicle occupant protection device according to claim 1, wherein said operation control means has a protruding portion, and movement of said operation control means to said intentionally activating position is prevented by said protruding portion abutting said preventing means.

7. A structure for intentionally activating a vehicle occupant protection device according to claim 6, wherein said canceling means cancels engagement of said operation control means and said preventing means by deforming said protruding portion to a non-protruding state.

8. A structure for intentionally activating a vehicle occupant protection device according to claim 7, wherein said canceling means has a substantially rectangular frame shape, and said operation control means is positioned within the substantially rectangular frame, and said protruding portion is pushed and deforms to the non-protruding state by movement of said canceling means in a direction of said intentionally activating position.

9. A structure for intentionally activating a vehicle occupant protection device according to claim 8, wherein said canceling means has a narrow portion which pushes said protruding portion when said canceling means moves in a direction of said intentionally activating position.

10. A structure for intentionally activating a vehicle occupant protection device according to claim 9, wherein said canceling means is moved in a direction of said intentionally activating position by one of pushing force and pulling force.

11. A structure for intentionally activating a vehicle occupant protection device which is used in a vehicle occupant protection device operating when a vehicle suddenly decelerates, comprising:
an operation control member which is positioned by operational force in any of an non-operative position, in which said operation control member makes operation of the vehicle occupant protection device impossible, an operative position, in which said operation control member makes operation of the vehicle occupant protection device possible, and an intentionally activating position, in which said operation control member intentionally activates the vehicle occupant protection device when the vehicle has not decelerated suddenly, and a deforming portion is formed at said operation control member at a side thereof in a direction in which said operation control member moves to said intentionally activating position;
a preventing member engaging with said deforming portion of said operation control member and preventing movement of said operation control member to said intentionally activating position; and
a canceling member which pushes and deforms said deforming portion of said operation control member, and cancels engagement of said operation control member and said preventing member.

12. A structure for intentionally activating a vehicle occupant protection device according to claim 11, wherein said non-operative position, said operative position and said intentionally activating position are positioned substantially linearly.

13. A structure for intentionally activating a vehicle occupant protection device according to claim 12, further comprising:
a first moving member which moves said operation control member from said non-operative position to said operative position and said intentionally activating position.

14. A structure for intentionally activating a vehicle occupant protection device according to claim 11, wherein a pair of said deforming portions are provided, and a pair of said preventing members are provided so as to correspond to the pair of said deforming portions.

15. A structure for intentionally activating a vehicle occupant protection device according to claim 13, further comprising:
a guide member guiding said operation control member when said operation control member moves.

16. A structure for intentionally activating a vehicle occupant protection device according to claim 15, wherein said canceling member pushes and deforms said deforming portion by said canceling member being moved in a direction of said intentionally activating position.

17. A structure for intentionally activating a vehicle occupant protection device according to claim 11, wherein said canceling member is provided with a substantially rectangular frame, and said frame is provided with a narrow portion, for which a distance between inner surfaces of said frame which oppose each other along a longitudinal direction of said frame is relatively small, and a wide portion, for which the distance between the inner surfaces of said frame which oppose each other along the longitudinal direction of said frame is relatively large, and said operation control member is disposed within said frame, and said deforming portion is deformed by being pushed by said narrow portion.

18. A structure for intentionally activating a vehicle occupant protection device according to claim 16, further comprising:
a second moving member which moves said canceling member in a direction of said intentionally activating position.

19. A structure for intentionally activating a vehicle occupant protection device according to claim 18, wherein said guide member guides said canceling member when said canceling member moves in a direction of said intentionally activating position.

20. A structure for intentionally activating an air bag device which is used in an air bag device operating due to inertial movement of an inertial body when sudden deceleration of a predetermined value or more is applied to a vehicle, and which is adapted to intentionally activate the air bag device when the vehicle is in a stopped state, comprising:
an operation control member, movable to an intentionally activating position, for intentionally activating the air bag device;
a preventing member, engaging with said operation control member, for preventing movement of said operation control member to said intentionally activating position; and
a canceling member for canceling engagement of said operation control member and said preventing member.
